# EUROPÄISCHE PATENTSCHRIFT

(11) **EP 2 528 746 B1**
(45) Veröffentlichungstag und Bekanntmachung des Hinweises auf die Patenterteilung: **19.03.2014**
(21) Anmeldenummer: 11703584.0
(22) Anmeldetag: 21.01.2011
(51) Int. Cl.: B42D 25/00, B42D 15/00, B41M 3/14, B44F 1/10, C09D 5/29, C09D 5/36, C09K 19/02, C09K 19/60, C09D 5/26

(54) **SICHERHEITSELEMENT MIT ERWEITERTEM FARBKIPPEFFEKT UND THERMOCHROMER ZUSATZFUNKTION**
SECURITY ELEMENT WITH EXPANDED COLOR-SHIFT EFFECT AND ADDITIONAL THERMOCHROMIC FUNCTION
ÉLÉMENT DE SÉCURITÉ AYANT UN EFFET INTERFÉRENTIEL AUGMENTÉ ET UNE FONCTION SUPPLÉMENTAIRE THERMOCHROMIQUE

(30) Priorität: 29.01.2010 DE 102010006173
(43) Veröffentlichungstag der Anmeldung: 05.12.2012
(73) Patentinhaber: Giesecke & Devrient GmbH, 81677 München (DE)
(72) Erfinder: BORNSCHLEGL, Alexander, 81735 München (DE); MENGEL, Christoph, 83607 Holzkirchen (DE); ENDRES, Günter, 81547 München (DE)
(86) Internationale Anmeldenummer: PCT/EP2011/000256
(87) Internationale Veröffentlichungsnummer: WO 2011/091969

(56) Entgegenhaltungen:
- EP-A1- 0 357 844
- EP-A1- 1 719 636
- DE-A1- 10 243 650
- DE-A1-102006 016 048
- DE-A1-102006 062 281
- US-A1- 2002 160 194
- US-A1- 2003 170 471
- US-A1- 2008 122 217
- US-A1- 2009 072 185

## Beschreibung

Die Erfindung betrifft ein Sicherheitselement zur Erhöhung des Fälschungsschutzes von Sicherheitsdokumenten, wie Banknoten, Wertpapieren, Ausweisen, Kreditkarten, Debit-Karten oder dergleichen, wobei das Sicherheitselement aus einer Mischung aus Farbkipp-Effektpigmenten und mikroverkapselten thermochromen Flüssigkristallpigmenten besteht.

Zum Schutz gegen Nachahmung, insbesondere mit Farbkopierern oder anderen Reproduktionsverfahren, werden Datenträger, wie beispielsweise Banknoten oder Karten, mit optisch variablen Sicherheitselementen ausgestattet. Der Fälschungsschutz beruht dabei darauf, dass der visuell und einfach und deutlich erkennbare optisch variable Effekt von den oben genannten Reproduktionsgeräten nicht oder nur ungenügend wiedergegeben wird.

Optisch variable Sicherheitselemente sind beispielsweise Dünnschichtelemente, die aus einer Reflektorschicht, einer dielektrischen Schicht und einer teildurchlässigen Schicht bestehen. Wird das Sicherheitselement von der Seite der teildurchlässigen Schicht aus betrachtet, nimmt der Betrachter eine bestimmte Farbe wahr, die sich mit Änderung des Betrachtungswinkels ändert.

Ursache der Farbverschiebung ist ein Interferenzeffekt zwischen den Lichtstrahlen, die von der Oberfläche der äußeren teildurchlässigen Schicht reflektiert werden, und den Lichtstrahlen, die durch die äußere teildurchlässige und die mittlere dielektrische Schicht hindurchtreten und von der inneren Reflektorschicht zu der teildurchlässigen Schicht zurückreflektiert werden. An der teildurchlässigen Schicht werden die Lichtstrahlen daraufhin entweder nach außen transmittiert oder wieder reflektiert, so dass in diesem Fall die Lichtstrahlen mehrfach zwischen der Reflexionsschicht und der teildurchlässigen Schicht hin- und herreflektiert werden. Somit haben die Lichtstrahlen, die durch die Dünnfilmschicht hindurchgetreten sind, einen längeren Weg zurückgelegt als die auf der Oberfläche der Dünnfilmschicht reflektierten Lichtstrahlen, so dass sie gegenüber diesen phasenverschoben sind, wenn sie mit ihnen interferieren.

Treffen die auf die Dünnfilmschicht einfallenden Lichtstrahlen mit unterschiedlichen Einfallswinkeln auf die Dünnfilmschicht auf, ist der in der Dünnfilmschicht zurückgelegte Weg der Lichtstrahlen unterschiedlich lang. Dieser Unterschied resultiert aus der durch den Einfallswinkel geänderten Wegdifferenz der mehrfach innerhalb der Dünnfilmschicht reflektierten Strahlen. Deshalb ist die Phasenlage der interferierenden Lichtstrahlen je nach Einfallswinkel unterschiedlich, so dass sich je nach Einfallswinkel unterschiedliche Farben oder Farbtöne des resultierenden, vom Beobachter wahrgenommenen Lichtstrahls ergeben.

Derartige Dünnschichtelemente können in Form von Folien verwendet werden, wie z.B. in WO 2005/108110 beschrieben. Aus WO 2005/108110 ist ein Sicherheitselement mit einer Dünnfilmschicht bekannt, bei dem die einzelnen Schichten vollflächig auf dem Sicherheitselement angeordnet sind. In die Schichtenfolge werden durch Einwirkung von Laserstrahlung Kennzeichnungen in Form von Mustern, Buchstaben, Zahlen oder Bildern eingebracht. Hierfür enthält die Schichtenfolge eine Markierungsschicht aus einem Farbgemisch, das eine die Laserstrahlung absorbierende sowie eine für die Laserstrahlung transparente Gemischkomponente aufweist. Die Kennzeichnungen sind aufgrund einer durch die Einwirkung der Laserstrahlung bewirkten irreversiblen Änderung der optischen Eigenschaften des Farbgemisches visuell und/ oder maschinell erkennbar.

Ebenso sind pigmentförmige Dünnschichtelemente bekannt, die einer Druckfarbe beigemischt werden. Die EP 0 227 423 B1 beschreibt Dünnschichtelemente mit einem symmetrischen Aufbau, um zu gewährleisten, dass das Pigment von jeder Seite gleich aussieht. Jedes der Dünnschichtelemente besteht aus einem fünfschichtigen Dünnfilm, der aus einer inneren Metallreflektorschicht, einer unten und oben angeordneten dielektrischen Schicht mit einem Brechungsindex von 1,65 oder weniger und jeweils einer äußeren semiopaken bzw. teildurchlässigen Schicht aufgebaut ist. Der fünfschichtige Dünnfilm bewirkt jeweils auf der dem Betrachter zugewandten Seite eine Farbverschiebung, d.h. einen Wechsel zwischen zwei unterschiedlichen Farben oder Farbtönen bei einem ersten und einem zweiten Betrachtungswinkel. So erscheint die optisch variable Farbe beispielsweise aus einem bestimmten Betrachtungswinkel magentafarben und aus einem anderen Betrachtungswinkel grün. Kippt ein Betrachter einen Datenträger, auf den eine derartige optisch variable Farbe aufgebracht ist, nimmt er einen Farbwechsel von Magenta nach Grün oder umgekehrt wahr.

Nachteil der Interferenzpigmente ist jedoch, dass unter gewissen Beleuchtungssituationen kein optischer Effekt mehr wahrgenommen werden kann. Dies ist vor allem dann der Fall, wenn sich Lichtquelle und Betrachter auf derselben Seite - bezogen auf die Druckflächennormale - befinden, beispielsweise an einem Point of sale. Hierbei kommt das Licht üblicherweise von der Decke, während die Geldscheine schräg nach unten in die Kassenschublade gelegt werden. Die Sicherheitsmerkmale erscheinen dabei dunkel, so dass zur Echtheitsprüfung die Banknote meist auf Augenhöhe gehoben und schräg gegen die Lichtquelle gehalten werden muss. Dies stellt einen deutlichen Mehraufwand dar und ist zudem für einen Kunden auffällig.

Für einen ausgeprägten Farbkippeffekt ist zudem möglichst gerichtetes Licht nötig. Gerade indirektes, diffuses Licht, wie es häufig zur gleichmäßigen Ausleuchtung von Waren verwendet wird, führt zu einem stark reduzierten Farbeffekt, da das Licht aus vielen verschiedenen Winkeln gleichzeitig auf die Pigmente eintrifft.

Aus EP 0 357 844 ist eine thermochrome Effektbeschichtung bekannt, wobei die Beschichtung eine wässrige Binderkomponente umfasst, die ein Farbkipp-Effektpigment und ein verkapseltes thermochromes Flüssigkristallpigment enthält. Die beschriebenen Farbkipp-Effektpigmente sind hierbei Aluminiumpigmente und Glimmerpigmente, wobei die Aluminiumpigmente bevorzugt aus plättchenförmigen Aluminiumpartikeln bestehen und die Glimmerpigmente bevorzugt mit Metalloxiden beschichtet sind. Bekanntlich werden mit Siliziumdioxid und Titandioxid, d.h. mit anorganischen Interferenzschichten, beschichtete Glimmerpigmente seit Mitte der 1980er Jahre verwendet und erzeugen den sogenannten Perlglanzeffekt. Beispiel hierfür sind die sogenannten Iriodin®-Pigmente der Fa. Merck. Die genannten Farbkipp-Effektpigmente sind jedoch auf dem Markt frei erhältlich und besitzen somit nur einen sehr geringen bzw. keinen Fälschungsschutz.

Das Dokument DE-A1-10 2006 016048 offenbart ein Sicherheitselement zur Erhöhung des Fälschungsschutzes von Sicherheitsdokumenten, wie Banknoten, Wertpapieren, Ausweisen, Kreditkarten, Debit-Karten oder dergleichen, wobei das Sicherheitselement aus einer Mischung aus Farbkipp-Effektpigmenten und verkapselten thermochromen Flüssigkristallpigmenten besteht, wobei die Farbkipp-Effektpigmenten anisotrope Interferenzpigmente sind (siehe Absätze [0008] und [0020] bis [0022]).

Der Erfindung liegt deshalb die Aufgabe zugrunde, ein gattungsgemäßes Sicherheitselement derart weiterzubilden, dass die Nachteile des Standes der Technik behoben, der Schutz gegenüber Fälschungen weiter erhöht sowie die Erkennbarkeit von Fälschungen verbessert wird.

Diese Aufgabe wird durch die Merkmale der unabhängigen Ansprüche gelöst. Weiterbildungen der Erfindung sind Gegenstand der abhängigen Ansprüche.

Erfindungsgemäß sind die Farbkipp-Effektpigmente anisotrope Interferenzpigmente. Erfindungsgemäß besteht das Sicherheitselement somit aus einer Mischung von isotropen, mikroverkapselten thermochromen Pigmenten mit anisotropen Interferenzpigmenten.

Anisotrope Pigmente im Sinne dieser Erfindung sind Pigmente, die einfallendes Licht nicht bzw. nur in geringem Maße zum Betrachter zurückreflektieren, wenn sich Lichtquelle und Betrachter auf derselben Seite der Flächennormalen (zweidimensional betrachtet) befinden.

Isotrope Pigmente im Sinne dieser Erfindung sind Pigmente, die einfallendes Licht in nahezu alle Raumrichtungen zurückreflektieren, unter anderem auch zum Betrachter. Die Lichtquelle kann dabei relativ zum Betrachter jede beliebige Position annehmen. Dies bedeutet, dass die Lage der Lichtquelle relativ zum Betrachter keine Rolle spielt. Die isotropen Pigmente können allerdings z. B. in ihrem Inneren anisotrope Strukturen enthalten. Für diesen Fall bedeutet isotrop im Sinne dieser Erfindung, dass die Pigmente weitgehend isotrop ausgerichtet in der Druckschicht vorliegen. Als Effekt ergibt sich dann ebenfalls, dass die Lichtquelle relativ zum Betrachter eine beliebige Position annehmen kann, ohne einen Verlust der Farbwirkung zu erhalten.

Das beschriebene ungünstige Verhalten von Sicherheitselementen des Standes der Technik resultiert aus der plättchenförmigen Struktur der verwendeten Pigmente. Einfallendes Licht kann nicht bzw. nur in geringem Maße zum Betrachter zurückgeworfen werden, wenn sich Lichtquelle und Betrachter auf derselben Seite der Flächennormalen (zweidimensional betrachtet) befinden. Durch die erfindungsgemäße Kombination von anisotropen Farbkipppigmenten mit isotrop reflektierenden Pigmenten kann somit besonders vorteilhaft auch in den ungünstigen Beleuchtungssituationen ein Farbkippeffekt erzielt werden. Dadurch ergibt sich eine erhöhte Sicherheit gegenüber Fälschungen und die Möglichkeit, neue Farbkippeffekte zu erzeugen. Des Weiteren ist das Merkmal durch Laserstrahlung in mehreren Stufen individualisierbar.

Erfindungsgemäß wird das isotrope thermochrome Pigment durch einen mikroverkapselten thermochromen Flüssigkristall gebildet. Ein mikroverkapselter thermochromer Flüssigkristall zeichnet sich dadurch aus, dass er eine temperaturabhängige Farbreflexionscharakteristik aufweist: Ab einer gewissen Auslösetemperatur reflektieren die Kapseln sichtbares Licht einer bestimmten zirkularen Polarisationsrichtung. Mit zunehmender Temperatur verschiebt sich diese Reflektion vom langwelligen in den kurzwelligen Bereich. Damit erhält man oberhalb der Auslösetemperatur des Flüssigkristalls einen veränderten Farbkippeffekteffekt.

Derartige mikroverkapselte thermochrome Flüssigkristalle sind beispielsweise aus DE 102 43 650 A1 bekannt, deren Offenbarung diesbezüglich vollumfänglich in diese Anmeldung mit aufgenommen wird.

Die mikroverkapselten thermochromen Pigmente sind bevorzugt teiltransparent und besonders bevorzugt transparent ausgeführt. Transluzenz im Sinne dieser Erfindung bedeutet, dass ein Objekt wie das Substrat oder die Kunststofffolie auftreffendes Licht in einem bestimmten Anteil hindurchtreten lässt. Trifft Licht auf eine Seite des Objekts auf, wird ein bestimmter Anteil des Lichtes bis zu der anderen Seite des Objekts hindurchgelassen und tritt dort wieder aus. Je größer der prozentuale Anteil des hindurchtretenden Lichtes bezogen auf das auftreffende Licht ist, desto transluzenter ist das Objekt. Liegt der prozentuale Anteil bei mindestens 90 %, d.h. lässt das Objekt das auftreffende Licht wie bei einem Fenster nahezu ungeschwächt hindurchtreten, wird das Objekt als transparent bezeichnet. Ein Objekt, das zwischen 90 % und 20 % des auftreffenden Lichtes hindurchtreten lässt, wird als teiltransparent bezeichnet. Ein Objekt hingegen, das weniger als 20 %, bevorzugt unter 10 % und besonders bevorzugt etwa 0 % des auftreffenden Lichtes hindurchtreten lässt, d.h. bei dem der Anteil des hindurchtretenden Lichtes bezogen auf das auftreffende Licht gering oder nahe oder gleich Null ist, wird als opak oder als nicht lichtdurchlässig bezeichnet.

Die erfindungsgemäßen anisotropen Interferenzpigmente bzw. pigmentförmigen Dünnschichtelemente sind bevorzugt dreischichtig aufgebaut und bestehen aus einer Reflexionsschicht, einer dielektrischen Schicht und einer teildurchlässigen Schicht. Wird das Sicherheitselement von der Seite der teildurchlässigen Schicht aus betrachtet, nimmt der Betrachter eine bestimmte Farbe wahr, die sich mit Änderung des Betrachtungswinkels ändert. Als Materialien für diese Schichten werden insbesondere verwendet:
- für die Reflexionsschicht alle reflektierenden Substanzen, insbesondere Metalle, wie Aluminium oder Kupfer,
- für die dielektrischen Schichten SiO₂ (Silizium-Dioxid), ZrO₂ (ZirkonDioxid) oder TiO₂ (Titan-Dioxid) oder andere transparente Stoffe,
- für die teildurchlässigen Schichten Chrom und/ oder Nickel.

Die erfindungsgemäßen anisotropen Interferenzpigmente bzw. pigmentförmigen Dünnschichtelemente sind besonders vorteilhaft fünfschichtig ausgeführt. Sie bestehen hierbei aus einer mittleren Reflexionsschicht, zwei die mittlere Reflexionsschicht auf jeder Seite umgebende dielektrische Schichten und zwei äußere teildurchlässige Schichten. Ein fünfschichtiges Pigment besteht somit aus einer unteren teildurchlässigen Schicht aus Chrom und/oder Nickel gefolgt von einer dielektrischen Schicht aus Silizium-Dioxid oder Magnesiumfluorid, einer mittleren Reflexionsschicht aus Aluminium, an die sich auf der gegenüberliegenden Seite wieder eine dielektrische Schicht aus Silizium-Dioxid oder Magnesiumfluorid anschließt, sowie abschließend aus einer oberen teildurchlässigen Schicht aus Chrom und/ oder Nickel. Licht, das auf die Ober- oder Unterseite des Pigments auftrifft, wird von der teildurchlässigen Schicht teilweise reflektiert und teilweise transmittiert. Der letztere Anteil tritt durch die dielektrische Schicht, die einen anderen Brechungsindex als die teildurchlässige Schicht aufweist, hindurch und wird von der Reflexionsschicht zurückreflektiert und nach Durchlaufen der dielektrischen Schicht wieder in einen transmittierten und einen reflektierten Anteil aufgespaltet.

Besonderer Vorteil der fünfschichtigen anisotropen Interferenzpigmente gegenüber den dreischichtigen ist, dass die fünfschichtigen anisotropen Interferenzpigmente sowohl von der Oberseite als auch von der Unterseite aus betrachtet einen Farbkippeffekt zeigen. Bei den dreischichtigen anisotropen Interferenzpigmenten hingegen tritt von der Unterseite, d.h. von der Reflexionsschicht, aus betrachtet kein Farbkippeffekt auf.

Die erfindungsgemäßen anisotropen Interferenzpigmente bzw. pigmentförmigen Dünnschichtelemente sind vorteilhaft siebenschichtig aufgebaut und bestehen aus einer mittleren Schicht, zwei die mittlere Schicht auf jeder Seite umgebende Reflexionsschichten, zwei dielektrische Schichten, die jeweils die Reflexionsschichten auf der jeweils der mittleren Schicht abgewandten Seite umgeben, und zwei äußeren teildurchlässigen Schichten. Die mittlere Schicht ist besonders bevorzugt magnetisch ausgeführt, d.h. ihr Material besitzt magnetische Eigenschaften, wobei die magnetische Eigenschaft vorzugsweise durch entsprechende Sensoren detektiert werden kann. Derartige Materialien mit magnetischen Eigenschaften sind vorzugsweise ferromagnetische Stoffe und hierbei bevorzugt weichmagnetische oder hartmagnetische Stoffe oder ferrimagnetische Stoffe und hierbei bevorzugt Ferrite. Als Material für die Reflexionsschichten, die dielektrischen Schichten und die teildurchlässigen Schichten werden insbesondere die gleichen Materialien verwendet wie für die oben genannten drei- oder fünfschichtigen anisotropen Interferenzpigmente bzw. pigmentförmigen Dünnschichtelemente.

Die Erfindung ist jedoch nicht nur auf drei-, fünf- oder siebenschichtige Pigmente beschränkt, sondern auf alle ein oder mehrschichtigen Pigmente anwendbar, die einen optisch variablen Effekt erzeugen. Insbesondere sind aus dem Stand der Technik optisch variable Schichten bekannt, die ausgehend von der Reflexionsschicht in Richtung des Betrachters mehr als zwei Schichten aufweisen. Auch an Pigmenten, die aus derartigen optisch variablen Schichten hergestellt sind und somit mehr als fünf Schichten aufweisen, ist die Erfindung anwendbar.

Die Erfindung umfasst hierbei sowohl das Sicherheitselement selbst als auch das Sicherheitsdokument, auf das das Sicherheitselement aufgebracht ist. Das Sicherheitsdokument ist hierbei beispielsweise eine Banknote, ein Wertpapier, eine Kredit- oder Ausweiskarte, ein Pass, eine Urkunde und Ähnliches, ein Label, eine Verpackung oder ein Element für die Produktsicherung. Bevorzugt wird das erfindungsgemäße Sicherheitselement direkt auf das Sicherheitsdokument aufgedruckt.

Alternativ ist das Sicherheitselement auf ein Substrat aufgedruckt, das wiederum auf das Sicherheitsdokument aufgebracht ist. Die Aufbringung auf das Sicherheitsdokument erfolgt bevorzugt mittels bekannter Transferverfahren, beispielsweise mittels Thermotransfer, Aufsiegeln, Aufkleben oder Verpressen.

Bevorzugte Druckverfahren sind beispielsweise Siebdruck, Flexodruck und Stichtiefdruck.

Das Substrat besteht besonders bevorzugt aus Papier aus Baumwollfasern, wie es beispielsweise für Banknoten verwendet wird. Durch eine beidseitige Beschichtung bzw. Kaschierung mit jeweils einer Kunststofffolie ergibt sich ein Sicherheitspapier, wie es in DE 102 43 653 A9 beschrieben ist, deren Offenbarung diesbezüglich vollumfänglich in diese Erfindung aufgenommen wird.

Bevorzugt kann das Substrat auch aus Papier aus anderen natürlichen Fasern, ebenso bevorzugt aus Synthesefasern, d.h. einer Mischung aus natürlichen und synthetischen Fasern oder ebenso bevorzugt aus mindestens einer Kunststofffolie bestehen, die beispielsweise aus einem Polymer besteht. Weiterhin bevorzugt besteht das Substrat aus einer Kombination aus mindestens zwei übereinander angeordneten und miteinander verbundenen unterschiedlichen Substraten, einem sogenannten Hybrid, beispielsweise einer Kombination Kunststofffolie-Papier-Kunststofffolie, d.h. ein Substrat aus Papier wird auf jeder seiner beiden Seiten durch eine Kunststofffolie bedeckt, oder Papier-Kunststofffolie-Papier, d.h. ein Substrat aus einer Kunststofffolie wird auf jeder seiner beiden Seiten durch ein Substrat aus Papier bedeckt.

Angaben zum Gewicht des verwendeten Substrats sind beispielsweise in der Schrift DE 102 43 653 A9 angegeben, deren Ausführungen diesbezüglich vollumfänglich in diese Anmeldung aufgenommen werden. Die Schrift DE 102 43 653 A9 führt insbesondere aus, dass die Papierschicht üblicherweise ein Gewicht von 50 g/m² bis 100 g/m² aufweist, vorzugsweise von 80 g/m² bis 90 g/m². Selbstverständlich kann je nach Anwendung jedes geeignete Gewicht eingesetzt werden.

Bevorzugt weist das Sicherheitsdokument bzw. das Substrat in dem Bereich, in dem das Sicherheitselement aufgedruckt ist, mindestens in einem Teilbereich eine dunkle Farbe auf. Besonders bevorzugt sind dunkelblau, violett, braun und dunkelrot. Hierdurch wird gewährleistet, dass das isotrope thermochrome Pigment besonders gut optisch erkannt werden kann. Ein weiterer Vorteil einer dunklen Untergrundfarbe ist, dass die zweite Prüfebene (Kontrolle des reflektierten zirkular polarisierten Lichts s. u.) einen umso höheren Kontrast zeigt, je weniger unpolarisiertes Licht vom Untergrund zurückgestreut wird.

Befindet sich das Sicherheitselement unterhalb der Auslösetemperatur, zeigt es den reinen Farbkippeffekteffekt des Interferenzpigments, beispielsweise von Grün nach Magenta, überlagert von der Untergrundfarbe. Durch den Einsatz verschiedener Untergrundfarben bzw. -raster können hierbei besondere Effekte erzielt werden. So kann in der Untergrundfarbgebung ein Farbton verwendet werden, der zu einer bestimmten Erscheinungsfarbe des Temperaturverlaufs der erfindungsgemäßen Druckschicht komplementär ist, was zu einem verstärkten Kontrast und einer besseren Erkennbarkeit beiträgt. Befindet sich das Sicherheitselement oberhalb der Auslösetemperatur, zeigt sich ein veränderter Farbkippeffekt, der sich zudem auch bei einer Rückbeleuchtungssituation zeigt.

Bevorzugt sind die Interferenzpigmente deckend ausgeführt. Im Sinne dieser Erfindung bedeutet der Begriff "deckend", dass die Pigmente eine Lichtdurchlässigkeit von weniger als 20 %, bevorzugt weniger als 10 % aufweisen. Vorteilhaft an dieser Ausführung ist, dass die Untergrundfarbe an den Stellen, an denen sich deckende Pigmente befinden, nicht den Farbkippeffekt des Pigments überdeckt.

Gemäß einer bevorzugten Ausführungsform ist vorgesehen, dass das thermochrome Flüssigkristall rechtszirkular oder linkszirkular polarisiertes Licht reflektiert. Dies wird dadurch erreicht, dass der Flüssigkristall in einer chiral nematischen Phase vorliegt. Durch diese Eigenschaft kann eine zweite Prüfebene realisiert werden. Diese zweite Prüfebene kann mittels eines vor das Sicherheitsmerkmal gehaltenen Zirkularpolarisators umgesetzt werden. Ist dieser z. B. nur für rechtszirkular polarisiertes Licht durchlässig, erscheint ein erfindungsgemäßes Sicherheitsmerkmal, das mit einem thermochromen Flüssigkristall ausgeführt wurde, der ausschließlich rechtszirkular polarisiertes Licht reflektiert, hell, während ein Sicherheitsmerkmal, das mit einem thermochromen Flüssigkristall gedruckt wurde, der ausschließlich linkszirkular polarisiertes Licht reflektiert, durch den Zirkularpolarisator gesehen dunkel erscheint.

Gemäß einer weiteren bevorzugten Ausführungsform ist vorgesehen, dass die isotropen Pigmente aus anderen sphärischen Pigmenten bestehen. Bevorzugt beispielsweise sphärische Flüssigkristallpigmente, die keinen thermochromen Effekt zeigen. Diese können beispielsweise dadurch hergestellt werden, indem ein cholesterischer Flüssigkristall mit vernetzbaren Funktionalitäten mikroverkapselt wird und anschließend bei einer definierten Temperatur vernetzt wird, so dass die gewünschte Farbe beibehalten wird.

Gemäß einer weiteren bevorzugten Ausführungsform ist vorgesehen, dass mehrere anisotrope, deckende Pigmenttypen mit mehreren isotrop reflektierenden Pigmenttypen kombiniert werden. Auch die zusätzliche Verwendung von transluzenten anisotropen Pigmenten ist möglich.

Da das Sicherheitsmerkmal unterhalb der Auslösetemperatur allein durch die anisotropen Pigmente bestimmt wird, eignet sich die Kombination mit einem thermochromen Flüssigkristall sehr gut als zusätzliches Sicherheitsmerkmal zu bestehenden Sicherheitsmerkmalen. Kombinationen sind beispielsweise mit handelsüblichen Perlglanzpigmenten auf Basis von Glimmer oder synthetischem Glas.

Das Mengenverhältnis von anisotropen Interferenzpigmenten zu isotropen Flüssigkristall-Pigmenten beträgt bevorzugt 1:20 bis 5:1 und besonders bevorzugt 1:10 bis 2:1. Durch die Anpassung des Mengenverhältnisses kann der optische Effekt verändert werden. Wird z. B. ein anisotropes Interferenzpigment eingesetzt, das einen sehr starken optisch variablen Effekt und/ oder eine hohe optische Brillanz und/oder eine sehr starke Deckung besitzt, kann der Anteil dieses Pigmentes in der Mischung geringer ausfallen als für den Fall, dass ein Pigmente mit schwach ausgeprägten optisch variablem Effekt und/oder geringer Brillanz und/oder schwächer deckendem Verhalten Verwendung findet.

Anhand der nachfolgenden Ausführungsbeispiele und den ergänzenden Figuren werden die Vorteile der Erfindung erläutert. Die Ausführungsbeispiele stellen bevorzugte Ausführungsformen dar, auf die jedoch die Erfindung in keinerlei Weise beschränkt sein soll. Des Weiteren sind die Darstellungen in den Figuren des besseren Verständnisses wegen stark schematisiert und spiegeln nicht die realen Gegebenheiten wider. Insbesondere entsprechen die in den Figuren gezeigten Proportionen nicht den in der Realität vorliegenden Verhältnissen und dienen ausschließlich zur Verbesserung der Anschaulichkeit. Des Weiteren sind die in den folgenden Ausführungsbeispielen beschriebenen Ausführungsformen der besseren Verständlichkeit wegen auf die wesentlichen Kerninformationen reduziert. Bei der praktischen Umsetzung können wesentlich komplexere Muster oder Bilder zur Anwendung kommen.

Im Einzelnen zeigen schematisch:
- Fig. 1: ein Sicherheitsmerkmal des Standes der Technik unter verschiedenen Beleuchtungswinkeln,
- Fig. 2: weitere Ausführungsformen eines erfindungsgemäßen Sicherheitselements,
- Fig. 3: eine mikroskopische Aufnahme einer erfindungsgemäßen Druckschicht,
- Fig. 4: eine mehrstufige Laserstrukturierung eines erfindungsgemäßen Sicherheitselementes,
- Fig. 5: eine Prägestrukturierung nach Intaglio-Prägung.

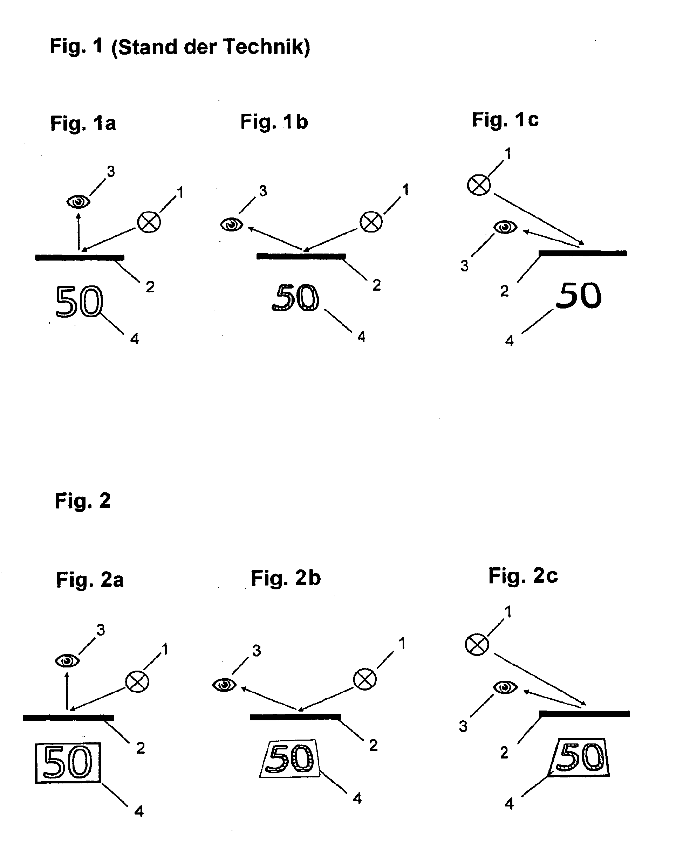

Fig. 1 zeigt das Erscheinungsbild eines herkömmlichern Sicherheitselements 2 des Standes der Technik in Abhängigkeit verschiedener Beleuchtungssituationen am Beispiel einer Information 4 in Form der Ziffer "50".

Dieses Sicherheitselement 2 besteht ausschließlich aus anisotropen Interferenzpigmenten, die in einem wässrigen Bindemittelsystem gebunden sind und auf ein Papiersubstrat aufgebracht worden sind. Das Sicherheitselement 2 befindet sich unterhalb der Auslösetemperatur, Es zeigt sich lediglich ein reiner Farbkippeffekteffekt des Interferenzpigments, beispielsweise von Grün nach Magenta, überlagert von der Untergrundfarbe.

Fig. 1a zeigt hierbei das erfindungsgemäße Sicherheitselement in Aufsicht, Fig. 1b bei schräger Ansicht im Gegenlicht und Fig. 1c bei schräger Ansicht mit Beleuchtung von hinten.

Gemäß Fig. 1a fällt Licht aus einer Lichtquelle 1 schräg auf das Sicherheitselement 2 mit den anisotropen Interferenzpigmenten. Ein Betrachter 3, der senkrecht auf das Sicherheitselement 2 blickt, erkennt die Ziffer 50 in der Farbe Grün.

Blickt der Betrachter gemäß Fig. 1b schräg auf das Sicherheitselement 2 erscheint die Ziffer 50 in der Farbe Magenta.

Erfolgt nun gemäß Fig. 1c die Beleuchtung schräg von hinten, d.h. befindet sich die Lichtquelle 1 hinter dem Betrachter, der schräg auf das Sicherheitselement 2 sieht, erscheint die Ziffer 50 schwarz bzw. in der Untergrundfarbe In der Beleuchtungssituation gemäß Fig. 1c wird einfallendes Licht somit nicht bzw. nur in geringem Maße zum Betrachter zurückgeworfen, da sich Lichtquelle und Betrachter auf derselben Seite der Flächennormalen (zweidimensional betrachtet) befinden.

Fig. 2 zeigt weitere Ausführungsformen eines erfindungsgemäßen Sicherheitselements. Hierbei befindet sich das Sicherheitselement oberhalb der Auslösetemperatur, so dass sich ein veränderter Farbkippeffekt zeigt, der sich zudem auch bei einer Rückbeleuchtungssituation zeigt.

Fig. 2a zeigt hierbei das erfindungsgemäße Sicherheitselement in Aufsicht, Fig. 2b bei schräger Ansicht im Gegenlicht und Fig. 2c bei schräger Ansicht mit Beleuchtung von hinten. Verwendet wurde ein anisotropes Effektpigment, das einen Farbflop von Grün (Aufsicht) zu Magenta (Gegenlicht) bewirkt, in der Mischung mit einem mikroverkapselten thermochromen Flüssigkristall. In der Aufsicht erscheint das so gefertigte Sicherheitselement in einem grünen Farbton (Fig. 2a), beim Übergang in eine Gegenlichtsituation erfolgt der Farbflop zu einem intensiven blauvioletten Farbton (Fig. 2b). In der in Fig. 2c dargestellten Rückbeleuchtungssituation ist eine deutliche grünblaue Farbe wahrzunehmen.

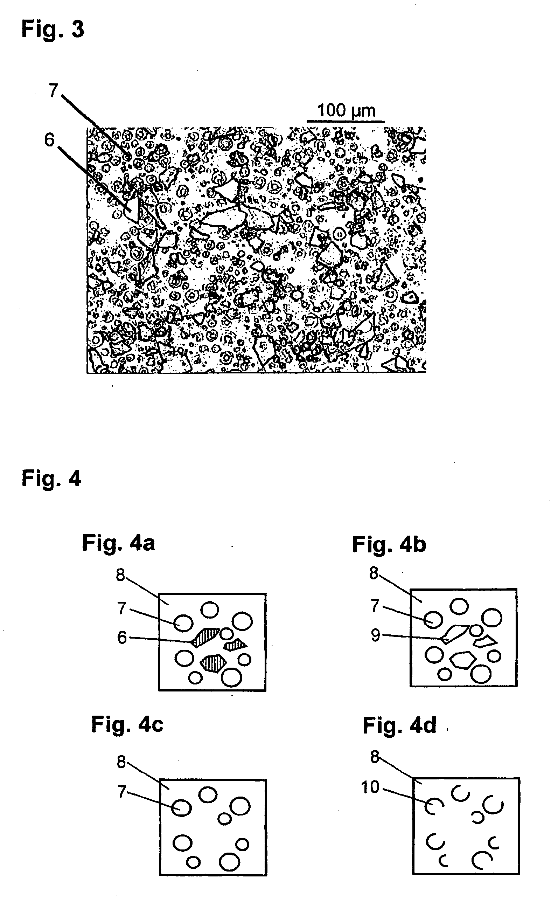

Fig. 3 zeigt eine mikroskopische Aufnahme einer erfindungsgemäßen Druckschicht, bestehend aus den plättchenförmigen anisotropen Interferenzpigmenten 6 und isotrop geformten Pigmenten 7 in Form von runden thermochromen Flüssigkristallpigmenten.

Fig. 4 zeigt skizzenhaft eine mehrstufige Laserstrukturierung eines erfindungsgemäßen Sicherheitselementes, das u.a. aus Dünnfilmpigmenten gemäß DE 10 2006 062 281 besteht. Im Wesentlichen lassen sich ausgehend vom unveränderten Sicherheitsmerkmal (Fig. 4a), bestehend aus dem dunklen Untergrund 8 und der Mischung aus isotropen thermochromen Flüssigkristallpigmenten 7 und anisotropen Interferenzpigmenten 6, drei verschiedenen Stufen durch geeignete Wahl der Laserparameter erzeugen, wie sie beispielsweise aus der DE 10 2006 062 281 bekannt sind:
- Fig. 4b: silberfarbig, thermochromer Effekt intakt: niedrige Leistungsdichte, die anisotropen Effektpigmente 6 zeigen keinen Farbflop mehr, sondern erscheinen silbergrau, die isotropen Flüssigkristallpigmente 7 sind funktionstüchtig und auch der Untergrund 8 wurde nicht verändert,
- Fig. 4c: Farbe des Untergrunds 8 sichtbar, thermochromer Effekt intakt: mittlere Leistungsdichte, die anisotropen Pigmente 6 wurden vollständig entfernt und tragen damit nicht mehr zum Farbeindruck des Merkmals bei; der Effekt wird nun nur noch durch die thermochromen Flüssigkristalle 7 in Verbindung mit der Farbe des Untergrunds 8 erzeugt,
- Fig. 4d: Farbe des Untergrunds 8 sichtbar, thermochromer Effekt zerstört: hohe Leistungsdichte, auch die thermochromen Effektpigmente 7 wurden zerstört und sind als zerstörte Mikrokapseln 10 dargestellt, das Element zeigt nun keine Temperaturabhängigkeit und keinen Farbflop mehr, sondern lediglich den Farbeindruck des Untergrunds 8.

Hierbei wird die Stärke des Silbereffekts in mehreren Stufen eingestellt, wie sie beispielsweise aus der DE 10 2006 062 281 bekannt sind.

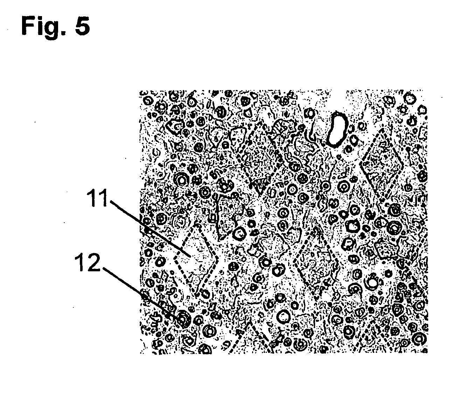

Eine erfindungsgemäße Druckschicht kann durch eine Verprägung strukturiert werden, beispielsweise durch Intaglio-Prägung in einer Stahlstichdruckmaschine. Fig. 5 zeigt eine solche Verprägung, durchgeführt mit einer Maschine für den Stahlstichdruck mit verprägten Bereichen 11 in Form von rautenförmigen Mustern neben unverprägten Bereichen 12. Die Kanten der Prägestrukturen der verprägten Bereiche 11 wurden hervorgehoben. In den Bereichen, die dem maximalen Druck ausgesetzt sind, werden die thermochromen Flüssigkristallpigmente zerstört und der reine Effekt des Interferenzpigmentes bleibt erhalten, während in den umliegenden Bereichen anisotrope Interferenzpigmente und isotrope Flüssigkristallpigmente statistisch verteilt sind.

### Bezugszeichenliste

- 1: Lichtquelle
- 2: Sicherheitselement
- 3: Betrachter
- 4: Information
- 6: anisotrop geformte Pigmente
- 7: isotrop geformte Pigmente
- 8: dunkler Untergrund
- 9: Pigment mit zerstörtem Interferenzeffekt
- 10: zerstörte Mikrokapsel
- 11: verprägter Bereich
- 12: unverprägter Bereich

## Patentansprüche

1. Sicherheitselement zur Erhöhung des Fälschungsschutzes von Sicherheitsdokumenten wie Banknoten, Wertpapieren, Ausweisen, Kreditkarten, Debit-Karten oder dergleichen, wobei das Sicherheitselement aus einer Mischung aus Farbkipp-Effektpigmenten und verkapselten thermochromen Flüssigkristallpigmenten besteht, **dadurch gekennzeichnet, dass** die Farbkipp-Effektpigmente anisotrope Interferenzpigmente sind, die einfallendes Licht nicht bzw. nur in geringem Maße zu einem Betrachter zurückreflektieren, wenn sich Lichtquelle und Betrachter auf derselben Seite der Flächennormalen (zweidimensional betrachtet) befinden.

2. Sicherheitselement nach Anspruch 1, **dadurch gekennzeichnet, dass** die anisotropen Interferenzpigmente dreischichtig aufgebaut sind und aus einer Reflexionsschicht, einer dielektrischen Schicht und einer teildurchlässigen Schicht bestehen.

3. Sicherheitselement nach Anspruch 1, **dadurch gekennzeichnet, dass** die anisotropen Interferenzpigmente fünfschichtig aufgebaut sind und aus einer mittleren Reflexionsschicht, zwei die mittlere Reflexionsschicht auf jeder Seite umgebende dielektrische Schichten und zwei äußere teildurchlässige Schichten bestehen.

4. Sicherheitselement nach Anspruch 1, **dadurch gekennzeichnet, dass** die anisotropen Interferenzpigmente siebenschichtig aufgebaut sind und aus einer mittleren, gegebenenfalls magnetischen Schicht, zwei die mittlere Schicht auf jeder Seite umgebende Reflexionsschichten, zwei dielektrische Schichten, die jeweils die Reflexionsschichten auf der jeweils der mittleren Schicht abgewandten Seite umgeben, und zwei äußeren teildurchlässigen Schichten bestehen.

5. Sicherheitselement nach mindestens einem der vorigen Ansprüche, **dadurch gekennzeichnet, dass** das Sicherheitselement auf das Sicherheitsdokument aufgedruckt ist.

6. Sicherheitselement nach Anspruch 5, **dadurch gekennzeichnet, dass** das Sicherheitsdokument in dem Bereich, in dem das Sicherheitselement aufgedruckt ist, mindestens teilweise eine dunkle Farbe aufweist.

7. Sicherheitselement nach mindestens einem der Ansprüche 1 bis 4, **dadurch gekennzeichnet, dass** das Sicherheitselement auf ein Substrat aufgedruckt ist.

8. Sicherheitselement nach Anspruch 7, **dadurch gekennzeichnet, dass das** Substrat auf das Sicherheitsdokument aufgebracht ist.

9. Sicherheitselement nach einem der Ansprüche 7 oder 8, **dadurch gekennzeichnet, dass** das Substrat in dem Bereich, in dem das Sicherheitselement aufgedruckt ist, mindestens teilweise eine dunkle Farbe aufweist.

10. Sicherheitselement nach mindestens einem der vorigen Ansprüche, **dadurch gekennzeichnet, dass** die mikroverkapselten thermochromen Pigmente bevorzugt teiltransparent und besonders bevorzugt transparent ausgeführt sind.

## Claims

1. A security element for increasing the protection from forgery of security documents, such as banknotes, value documents, identity cards, credit cards, debit cards or the like, wherein the security element consists of a mixture of color-shift effect pigments and encapsulated thermochromic liquid crystal pigments, **characterized in that** the colorshift effect pigments are anisotropic interference pigments, which do not or only to a small measure reflect back incident light to a viewer when the light source and the viewer are located on the same side of the surface normal (viewed two-dimensionally).

2. The security element according to claim 1, **characterized in that** the anisotropic interference pigments are constructed in three layers and consist of a reflective layer, a dielectric layer and a partly transmissive layer.

3. The security element according to claim 1, **characterized in that** the anisotropic interference pigments are constructed in five layers and consist of a middle reflective layer, two dielectric layers surrounding the middle reflective layer on each side and two outer partly transmissive layers.

4. The security element according to claim 1, **characterized in that** the anisotropic interference pigments are constructed in seven layers and consist of a middle, optionally magnetic layer, two reflective layers surrounding the middle layer on each side, two dielectric layers respectively surrounding the reflective layers on the side respectively facing away from the middle layer, and two outer partly transmissive layers.

5. The security element according to at least one of the preceding claims, **characterized in that** the security element is printed on the security document.

6. The security element according to claim 5, **characterized in that** the security document has at least partly a dark color in the region in which the security element is printed.

7. The security element according to at least one of the claims 1 to 4, **characterized in that** the security element is printed on a substrate.

8. The security element according to claim 7, **characterized in that** the substrate is applied on the security document.

9. The security element according to any of the claims 7 or 8, **characterized in that** the substrate has at least partly a dark color in the region in which the security element is printed.

10. The security element according to at least one of the preceding claims, **characterized in that** the micro-encapsulated thermochromic pigments are configured preferably to be partly transparent and particularly preferably to be transparent.

## Revendications

1. Elément de sécurité destiné à l'accroissement de la protection contre la contrefaçon de documents de sécurité tels que billets de banque, papiers-valeurs, pièces d'identité, cartes de crédit, cartes de débit ou autres pièces similaires, l'élément de sécurité consistant en un mélange de pigments à effet de changement des couleurs par basculement et de pigments thermochromiques encapsulés à cristaux liquides, **caractérisé en ce que** les pigments à effet de changement des couleurs par basculement sont des pigments interférentiels anisotropes qui ne réfléchissent pas ou peu à nouveau la lumière incidente vers un observateur quand la source lumineuse et l'observateur se trouvent du même côté de la normale à la surface (lors d'une observation en deux dimensions).

2. Elément de sécurité selon la revendication 1, **caractérisé en ce que** les pigments interférentiels anisotropes sont constitués de trois couches et consistent en une couche réfléchissante, une couche diélectrique et une couche partiellement perméable.

3. Elément de sécurité selon la revendication 1, **caractérisé en ce que** les pigments interférentiels anisotropes sont constitués de cinq couches et consistent en une couche réfléchissante médiane, deux couches diélectriques entourant de chaque côté la couche réfléchissante médiane et deux couches partiellement perméables extérieures.

4. Elément de sécurité selon la revendication 1, **caractérisé en ce que** les pigments interférentiels anisotropes sont constitués de sept couches et consistent en une couche médiane éventuellement magnétique, deux couches réfléchissantes entourant de chaque côté la couche médiane, deux couches diélectriques qui entourent respectivement les couches réfléchissantes du côté tourné respectivement à l'opposé de la couche médiane, et deux couches partiellement perméables extérieures.

5. Elément de sécurité selon au moins une des revendications précédentes, **caractérisé en ce que** l'élément de sécurité est imprimé sur le document de sécurité.

6. Elément de sécurité selon la revendication 5, **caractérisé en ce que**, dans la zone dans laquelle l'élément de sécurité est imprimé, le document de sécurité présente au moins partiellement une couleur foncée.

7. Elément de sécurité selon au moins une des revendications de 1 à 4, **caractérisé en ce que** l'élément de sécurité est imprimé sur un substrat.

8. Elément de sécurité selon la revendication 7, **caractérisé en ce que** le substrat est appliqué sur le document de sécurité.

9. Elément de sécurité selon une des revendications 7 ou 8, **caractérisé en ce que**, dans la zone dans laquelle l'élément de sécurité est imprimé, le substrat présente au moins partiellement une couleur foncée.

10. Elément de sécurité selon au moins une des revendications précédentes, **caractérisé en ce que** les pigments thermochromiques microencapsulés à cristaux liquides sont de préférence réalisés sous forme partiellement transparente ou particulièrement de préférence sous forme transparente.
